Europäisches Patentamt

European Patent Office    (11) Numéro de publication: **0 309 037**

Office européen des brevets    **A1**

(12) **DEMANDE DE BREVET EUROPEEN**

(21) Numéro de dépôt: 88202003.5    (51) Int. Cl.4: **G06F 7/52**

(22) Date de dépôt: 15.09.88

(30) Priorité: 25.09.87 FR 8713291

(43) Date de publication de la demande:
29.03.89 Bulletin 89/13

(84) Etats contractants désignés:
**DE FR GB**

(71) Demandeur: **Laboratoires d'Electronique et de Physique Appliquée L.E.P.
3, Avenue Descartes
F-94450 Limeil-Brévannes(FR)**

(84) **FR**

(71) Demandeur: **N.V. Philips'
Gloeilampenfabrieken
Groenewoudseweg 1
NL-5621 BA Eindhoven(NL)**

(84) **DE GB**

(72) Inventeur: **Martin, Philippe Société Civile
S.P.I.D.
209, rue de l'Université
F-75007 Paris(FR)**
Inventeur: **Bonnet, Thierry Société Civile
S.P.I.D.
209, rue de l'Université
F-75007 Paris(FR)**
Inventeur: **Mathieu, Yves Société Civile
S.P.I.D.
209, rue de l'Université
F-75007 Paris(FR)**

(74) Mandataire: **Landousy, Christian
Société Civile S.P.I.D. 209, Rue de
l'Université
F-75007 Paris(FR)**

(54) Multiplieur pipeline série.

(57) Multiplieur pipeline série à structure cellulaire dont chaque cellule comprend un additionneur qui opère sur 3 données à un bit $x$, $y$, $c$ et détermine le résultat $v$ modulo 2 et la retenue $c_o$ de l'opération d'addition de $x$, $y$ et $c$. Chaque additionneur détermine simultanément une donnée $c_1$ qui est le résultat modulo 2 de l'addition de $x$, $y$, $c_o$. Ceci permet d'obtenir le résultat final exact d'une multiplication d'une donnée A de $n$ bits par une donnée B de $p$ bits selon deux tranches successives, l'une L formée de $p$ bits de poids faibles et l'autre H formée des $n$ bits de poids forts avec un débit $F/n$ où F est la fréquence d'horloge.

Les multiplieurs peuvent être cascadés grâce à un signal externe. Ils peuvent également être mis en parallèle pour effectuer l'addition des résultats de deux multiplications.

FIG.2

## MULTIPLIEUR PIPELINE SERIE

L'invention concerne un multiplieur pipeline série à structure cellulaire destiné à multiplier deux flux de données numériques synchrones A de n bits $[a_n \dots a_k \dots a_1]$ et B de p bits $[b_p \dots b_k \dots b_1]$, n, k et p étant des entiers, en opérant dans chaque cellule de la structure, en mode pipeline, la formation des produits partiels du multiplicande A par chaque bit du multiplicateur B puis leurs additions successives à une fréquence F d'horloge, chaque cellule d'ordre k comprenant :

- un additionneur élémentaire à un bit qui reçoit respectivement des données $x_k$, $y_k$ et des retenues $c_k$, et qui délivre à un instant donné un résultat $v_k$ et une retenue $c_{ok}$, tel que

$v_k = (x_k \,\&\, y_k \,\&\, c_k)$ modulo 2

$c_{ok} = (x_k \,\&\, y_k \,\&\, c_k)$ div 2

où $c_k$ à un instant donné est égal à la donnée $c_{ok}$ déterminée dans la même cellule au temps d'horloge précédent puis retardée soit $c_k = c_{ok}(d)$,

- des moyens de retard pour synchroniser les données issues de deux cellules successives,
- et des moyens de stockage temporaire d'un bit de donnée et de la retenue $c_{ok}$.

Pour opérer la multiplication série de deux données numériques on stocke chaque bit d'une des données dans des cellules d'un multiplieur et on multiplie ces bits par les bits de la seconde donnée pour fournir des produits partiels qui sont additionnés selon leurs poids binaires.

Un multiplieur de ce genre est connu du document GB 2 166 272A qui décrit un multiplieur série qui opère sur des données signées et qui permet à l'aide d'un drapeau exter ne de rendre le multiplieur cascadable lorsque l'on désire étendre le nombre de bits des données d'entrée.

Mais dans ce document il n'est décrit que la réalisation de multiplications tronquées, seule la partie poids fort du résultat est délivrée. Le résultat déterminé est alors approché. Or un premier problème posé, et qu'il est nécessaire de résoudre pour certaines applications, est de disposer du résultat exact de l'opération mais sans accroître le temps de calcul.

Ce problème est résolu par l'invention qui est remarquable en ce que le multiplieur comprend des moyens pour délivrer le résultat exact de l'opération en deux tranches consécutives de bits, avec n ou p cellules, sous le contrôle d'un signal R, A et B étant introduits avec le bit de poids le plus faible en tête, tout d'abord, avec p cellules (respectivement n cellules), une tranche L formée des p bits (respectivement n bits) de poids binaires les plus faibles puis une tranche H formée des n bits (respectivement p bits) de poids binaires les plus élevés, le multiplieur ayant un débit F/n (respectivement F/p), ces moyens comprenant :

- des moyens de génération, puis de stockage temporaire, d'une donnée $c_{1k}$ tel que :

$c_{1k} = (x_k \,\&\, y_k \,\&\, c_{ok})$ modulo 2

la donnée $c_{1k}$ étant délivrée au cours du même temps d'horloge que la donnée $c_{ok}$,

- et des moyens pour déterminer les tranches partielles $L_k$ et $H_k$ délivrées par chaque cellule d'ordre k tel que :

$L_k = L_{k-1}(d).R_{k-1}(d) + v_k.\overline{R}_{k-1}(d)$

et $H_k = v_k.R_{k-1}(d) + c_{1k}(d).\overline{R}_{k-1}(d)$

où $R_{k-1}(d)$ est le signal $R_{k-1}$ retardé d'un temps d'horloge dans la cellule k, $R_{k-1}$ étant issu du signal R transmis à la cellule k à travers les cellules précédentes, la réintroduction de la retenue $c_k$ dans l'additionneur d'ordre k étant contrôlée par le signal $R_{k-1}(d)$ selon $c_k = c_{ok}(d).R_{k-1}(d)$ pour les p-1$^{\text{ième}}$ premières cellu les (respectivement les n-1$^{\text{ième}}$ premières cellules) et $c_p = b_p.\overline{R}_{p-1}(d) + R_{p-1}(d).c_{op}(d)$ pour la p$^{\text{ième}}$ cellule (respectivement $c_n = b_n.\overline{R}_{n-1}(d) + R_{n-1}(d).c_{on}(d)$ pour la n$^{\text{ième}}$ cellule), $C_{1k}(d)$ étant la donnée $c_{1k}$ retardée d'un temps d'horloge dans la k$^{\text{ième}}$ cellule, les p-1$^{\text{ième}}$ premières cellules (respectivement les n-1$^{\text{ième}}$ premières cellules) effectuant sur les données A et B des opérations de type $A.b_k$ et la p$^{\text{ième}}$ cellule (respectivement n$^{\text{ième}}$ cellule) effectuant une opération de type $\overline{A}.b_p$ (respectivement $\overline{A}.b_n$), les moyens de retard retardant dans chaque cellule d'un cycle d'horloge les bits du multiplicateur B (respectivement le multiplicande A) par rapport aux bits du multiplicande A (respectivement le multiplicateur B), les symboles utilisés étant :

(.): ET logique; ( + ): OU logique; (&): addition.

Un problème technique secondaire est de pouvoir cascader deux multiplieurs. Pour cela la dernière cellule comprend des moyens pour déterminer la retenue $c_p$ (respectivement $c_n$) selon :

$c_p = F.b_p.\overline{R}_{p-1}(d) + R_{p-1}(d).c_{op}(d)$

(respectivement $c_n = \overline{F}.b_n.R_{n-1}(d) + R_{n-1}(d).c_{on}(d)$) et pour effectuer l'opération du type : $(A * F).b_p$ - (respectivement $(A * F).b_n$), avec (*) représentant la fonction OU-exclusif, et où F est un signal qui permet de contrôler la dernière cellule afin d'obtenir un multiplieur cascadable. On peut ainsi réaliser une chaîne de plusieurs multiplieurs pour former une structure multiplicatrice.

Un autre problème technique secondaire consiste à pouvoir mettre en parallèle plusieurs multiplieurs afin de faire une opération telle que l'addition des résultats de deux multiplications : (AxB) & (CxD) tout en délivrant le résultat exact. Pour cela l'invention permet de réaliser une structure multiplicatrice qui comprend en parallèle deux multiplieurs ou deux chaînes de multiplieurs délivrant simultanément leurs deux tranches $L_1$ et $L_2$ ainsi que leurs deux tranches $H_1$ et $H_2$, les tranches $L_1$ et $L_2$ étant additionnées dans un premier additionneur, et les tranches $H_1$ et $H_2$ et la retenue du premier additionneur étant additionnées dans un second additionneur, chaque additionneur délivrant l'un la partie correspondant aux bits de poids binaires les plus faibles et l'autre la partie correspondant aux bits de poids binaires les plus forts du résultat global.

Il est possible de traiter des données A de n bits et B de p bits. Avantageusement le multiplieur aura un nombre de cellules égal au plus petit des nombres p ou n afin de disposer d'un multiplieur compact.

Dans les équations qui suivent les symboles habituels de la notation algébrique sont repris, à savoir : (.) : multiplication ; ( + ) : addition ; (-) : soustraction.

Soient deux nombres binaires A et B constitués des suites de bits :

$A = [a_n \ldots a_k \ldots a_1]$

et $B = [b_p \ldots b_k \ldots b_1]$.

Si ces nombres binaires sont négatifs ils sont représentés en complément à 2 selon la méthode habituelle. La multiplication de A par B est un nombre codé sur $(n+p)$ bits :

$$P_{np} = A.B = \sum_{k=1}^{p-1} A.b_k.2^{k-1} - A.b_p.2^{p-1}.$$

On définit les produits partiels :

$P(o) = o$

(1)    $P(k) = P(k-1) + A.b_k.2^{k-1}$    pour $1 \leq k < p$

et $P(p) = P(p-1) - A.b_p.2^{p-1}$    pour $k = p$

Les produits $P(k)$, sont des suites de nombres binaires que l'on peut écrire :

(2)    $P(k) = [P_{n+k} \ldots P_k \ldots P_1]$.

On peut décomposer cette suite en deux termes pour chaque cellule d'ordre k :

(3)    $L(k) = [P_k \ldots P_1]$

(4)    et $H(k) = [P_{n+k} \ldots P_{k+1}]$,

où $L_k$ correspond à un terme non signé et $H_k$ correspond à un terme signé.

On écrit le terme $P(k)$ tel que :

(5)    $P(k) = H(k).2^k + L(k)$.

De même le terme $P(k)$ s'écrit à partir du terme précédent $P(k-1)$ tel que :

(6)    $P(k) = P(k-1) + A.b_k.2^{k-1}$

c'est-à-dire :

(7)    $P(k) = (H(k-1) + A.b_k).2^{k-1} + L(k-1)$.

Le terme $H(k-1) + A.b_k$ est une suite binaire $S = [s_{n+1} \ldots s_1]$ qui peut être exprimée par

(8)    $$S = H(k-1) + A.b_k = \sum_{i=1}^{n} s_i.2^{i-1} - s_{n+1}.2^n$$

soit :

(9)    $$P(k) = (\sum_{i=1}^{n} s_i.2^{i-1} - s_{n+1}.2^n).2^{k-1} + L(k-1).$$

Par comparaison avec (5) on déduit que

$H(k) = [s_{n+1} \ldots s_2]$

et $L(k) = L(k-1) + s_1.2^{k-1}$.

Donc la détermination du terme $H(k-1) + A.b_k$ va permettre de déterminer la suite S, dont les bits de poids forts constituent le terme $H(k)$ de la cellule d'ordre k, le terme $L(k)$ se déduisant du terme $(L(k-1)$ en ajoutant le bits de poids faible $s_1$ pondéré par le coefficient $2^{k-1}$. Ce processus est mis en oeuvre dans chaque cellule d'ordre k. Pour la première cellule les termes H(0) et L(0) sont nuls. Les termes $L_1, L_2, \ldots L_p$ sont déterminés successivement dans les cellules d'ordre 1, 2, ... p et apparaissent dans cet ordre à la sortie de la $p^{ième}$ cellule sur la connexion propre à L. En même temps que s'effectue la détermination des

termes $L_1$ ... $L_p$, le multiplieur détermine les termes $H_1$ ... $H_p$ qui apparaissent sur la connexion propre à H en sortie du multiplieur lorsque la sortie des termes $L_1$ à $L_p$ est terminée. Les deux tranches L et H du résultat final apparaissent donc consécutivement en sortie.

L'invention sera mieux comprise à l'aide des figures suivantes données à titre d'exemple non limitatif qui représentent :

- figure 1A : un schéma de la structure cellulaire du multi plieur pipeline série selon l'invention avec p cellules pour une multiplication n x p avec n > p.

- figure 1B : un diagramme des temps relatif à une multiplication n x n bits.

- figure 1C : un diagramme des temps relatif à la structure de la figure 1A.

- figure 2 : un schéma logique représentant une cellule d'ordre k avec $1 \leq k < p$ et la dernière cellule d'ordre p.

- figure 3 : une représentation du mouvement des données dans les tranches L et H selon l'invention.

- figure 4 : un schéma modifié de la dernière cellule pour obtenir un multiplieur cascadable.

- figure 5 : un schéma représentant la mise en parallèle de deux multiplieurs selon l'invention afin de réaliser l'opération (AxB) & (CxD).

Les symboles suivants sont à nouveau utilisés :

(.) : ET logique ; ( + ) : OU logique ; (x) : multiplication ; (&) : addition ; (*) : OU-exclusif ; (-) : inversion.

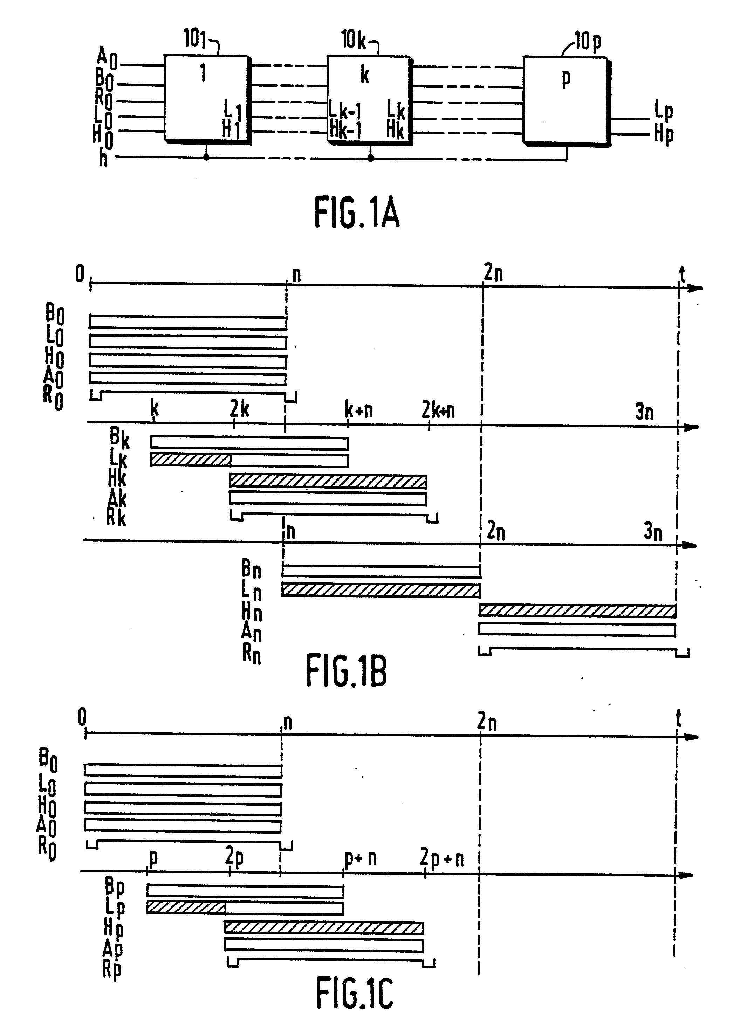

La figure 1A représente un schéma de la structure cellulaire du multiplieur pipeline série selon l'invention. Le multiplieur comprend des cellulles $10_1$, ... $10_k$ ... $10_p$. Elles présentent 5 entrées plus une entrée d'horloge h pour assurer le synchronisme des opérations. L'horloge est distribuée sur toutes les cellules.

Les entrées A et B sont destinées à recevoir respectivement les données [$a_n$ ... $a_1$] et [$b_p$ ... $b_1$] à multiplier. Ces données entrent toutes deux avec le bit le moins significatif en tête. Un signal de contrôle R permet de contrôler les échanges entre les différentes cellules et à l'intérieur des cellules elles-mêmes. Les entrées L et H reçoivent les valeurs de l'étage précédent. Dans le cas de la première cellule celles-ci sont mises à la valeur zéro. Mais l'entrée H peut recevoir des valeurs non nulles lorsqu'une constante est à ajouter.

La cellule 1 transmet à la cellule 2 les données introduites sur A, B et R en les retardant. Elle transmet également les valeurs $L_1$ et $H_1$ qu'elle a calculées. Ce processus se poursuit jusqu'à la $p^{\text{ième}}$ cellule qui délivre le résultat final d'abord Lp puis Hp.

La figure 1B donne le diagramme des temps du déroulement des opérations pour n cellules, dans le cas où les données A et B ont toutes deux une longueur de n bits. Toutes les cellules vont opérer durant un temps égal à n fois l'horloge de base de durée h. La première cellule opère dès l'instant initial, la $k^{\text{ième}}$ cellule commence à opérer avec un retard de kxh et la $n^{\text{ième}}$ cellule commence à opérer avec un retard de nxh. La cellule k délivre à l'instant k le premier bit de son terme $L_k$, et à l'instant 2k délivre le premier bit de son terme $H_k$.

De même la cellule n délivre à l'instant n le premier bit de son terme $L_n$ et délivre à l'instant 2n le premier bit de son terme $H_n$.

La figure 1C donne le diagramme des temps du déroulement des opérations avec p cellules pour des données A de n bits et B de p bits. Cela correspond au cas de la figure 1B avec k = p.

La cellule p délivre à l'instant p le premier bit de son terme Lp et à l'instant 2p délivre le premier bit de son terme $H_p$.

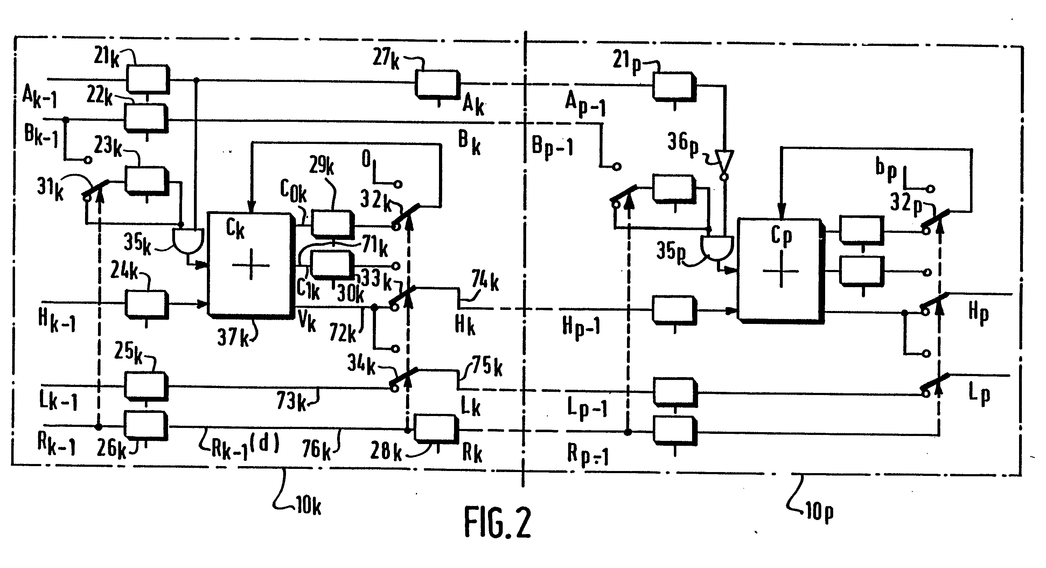

La figure 2 est un schéma logique représentant la cellule $10_k$ d'ordre k ($1 \leq k < p$) et la dernière cellule $10_p$ d'ordre p.

La cellule $10_k$ comprend les éléments suivants :

- une bascule $21_k$ suivie d'une bascule $27_k$ pour retarder les données $A_{k-1}$
- une bascule $22_k$ pour retarder les données $B_{k-1}$
- une bascule $24_k$ pour retarder les données $H_{k-1}$
- une bascule $25_k$ pour retarder les données $L_{k-1}$
- une bascule $26_k$ suivie d'une bascule $28_k$ pour retarder les signaux $R_{k-1}$
- un sélecteur $31_k$ qui prélève sous le contrôle du signal $R_{k-1}$ le $k^{\text{ième}}$ bit de la donnée $B_{k-1}$ c'est-à-dire $b_k$. Celui-ci est stocké pendant une durée nxh dans la bascule $23_k$ pour être utilisé par la cellule k. La sortie de la bascule $23_k$ et celle de la bascule $21_k$ entrent dans une porte ET $35_k$ pour effectuer la multiplication du bit $b_k$ par [$a_n$ ... $a_1$]. Toutes les bascules sont contrôlées par l'horloge h.

Chaque cellule $10_k$ comprend un additionneur $37_k$. C'est un additionneur à 1 bit à 3 entrées et 3 sorties. En appelant x, y, r le bit présent respectivement sur chaque entrée et en appelant v, $c_0$, $c_1$ le bit présent respectivement sur chaque sortie, le résultat délivré par l'additionneur s'exprime d'une manière générale par les équations logiques suivantes :

si $x * y = 1$ alors $v = \bar{r}$, $c_0 = r$ et $c_1 = \bar{r}$

si $x * y = 0$ alors $v = r$, $c_0 = x$ et $c_1 = x$

où le symbole (*) représente le OU-exclusif et le symbole (-) représente l'opération d'inversion.

La sortie de la porte ET $35_k$ est additionnée dans l'additionneur $37_k$ avec la sortie de la bascule $24_k$ et avec une retenue $c_k$ pour fournir le résultat partiel $v_k$. L'additionneur $37_k$ délivre également une retenu $c_{ok}$ qui est retardée dans une bascule $29_k$. Un sélecteur $32_k$ délivre la retenue $c_k$ tel que :

$c_k = c_{ok}(d).R_{k-1}(d)$.

L'additionneur $37_k$ délivre également la donnée $c_{1k}$ définie par $c_{1k} = [x_k \& y_k \& c_{ok}]$ modulo 2 dans le même temps d'horloge que la donnée $c_{ok}$.

Un sélecteur $33_k$ délivre les données $H_k$ tel que : $H_k = v_k.R_{k-1}(d) + c_{1k}(d).\bar{R}_{k-1}(d)$.

De même un sélecteur $34_k$ délivre les données $L_k$ tel que : $L_k = v_k.\bar{R}_{k-1}(d) + L_{k-1}(d).R_{k-1}(d)$.

La cellule $10_p$ est analogue à la cellule $10_k$ à l'exception des points suivants. Le sélecteur $32_p$ sélectionne la retenue $c_p$ tel que :

$c_p = \bar{R}_{p-1}(d).b_p + R_{p-1}(d).c_{op}(d)$

- la sortie de la bascule 21p entre dans un inverseur 36p dont la sortie entre dans une porte ET 35p,

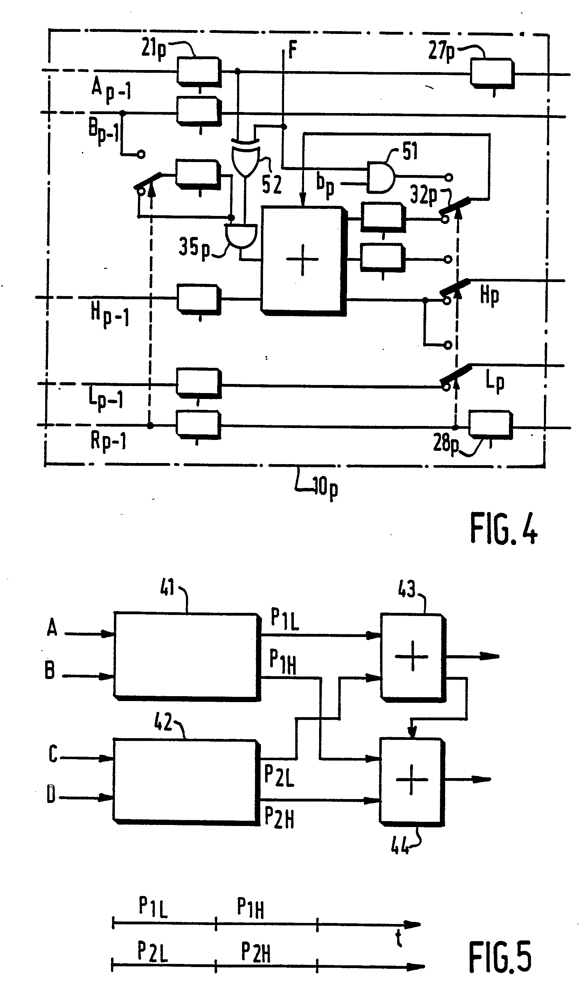

- les bascules 27p et 22p peuvent être supprimées sauf lorsque deux multiplieurs sont mis en série et que les données A et B doivent être transmises (voir figure 4).

Le mécanisme de fonctionnement est le suivant donné à titre d'exemple avec 4 bits pour les données A et B. Le multiplieur présente alors 4 cellules. Au début du premier temps $R_o = 0$.

A l'issue du 1er temps :

. La bascule $21_1$ stocke $a_1$

. La bascule $22_1$ stocke $b_1$

. La bascule $23_1$ stocke $b_1$

. La bascule $24_1$ stocke $H(0) = 0$

. La bascule $25_1$ stocke $L(0) = 0$

. La bascule $26_1$ passe à l'état logique 0

Au cours du 2ème temps :

. l'additionneur $37_1$ commence à opérer en calculant $a_1.b_1$

A l'issue du 2ème temps :

. le bit $a_1$ a progressé jusqu'à la sortie de la bascule $27_1$

. le bit $b_1$ a progressé jusqu'à la sortie de la bascule $22_2$

. la bascule $23_1$ conserve le bit $b_1$

. la bascule $23_2$ est toujours à zéro.

A l'issue du 3ème temps :

. le bit $a_1$ a progressé jusqu'à la sortie de la bascule $22_1$

. le bit $b_2$ a progressé jusqu'à la sortie de la bascule $22_2$

. la bascule $23_1$ conserve le bit $b_1$

. la bascule $23_2$ stocke le bit $b_2$.

Au cours du 4ème temps :

. l'additionneur $37_2$ commence à opérer en calculant $a_1.b_2$.

Les calculs effectués dans chaque cellule se déroulent de la manière suivante :

|  | 1ère cellule | 2ème cellule |
|---|---|---|
| 1er temps | 0 | 0 |
| 2ème temps | $a_1b_1$ | 0 |
| 3ème temps | $a_2b_1$ | $a_1b_1$ & 0 |
| 4ème temps | $a_3b_1$ | $a_2b_1$ & $a_1b_2$ |
| 5ème temps | $a_4b_1$ | $a_3b_1$ & $a_2b_2$ |
| 6ème temps | 0 | $a_4b_1$ & $a_3b_2$ |
| 7ème temps | 0 | 0 & $a_4b_2$ |
| 8ème temps | 0 | 0 |
| 9ème temps | 0 | 0 |
| 10ème temps | 0 | 0 |
| 11ème temps | 0 | 0 |

|  | 3ème cellule | 4ème cellule |
|---|---|---|
| 1er temps | 0 | 0 |
| 2ème temps | 0 | 0 |
| 3ème temps | 0 | 0 |
| 4ème temps | $a_1b_1$ & 0 | 0 |
| 5ème temps | $a_2b_1$ & $a_1b_2$ & 0 | $a_1b_1$ |
| 6ème temps | $a_3b_1$ & $a_2b_2$ & $a_1b_3$ | $a_2b_1$ & $a_1b_2$ |
| 7ème temps | $a_4b_1$ & $a_3b_2$ & $a_2b_3$ | $a_3b_1$ & $a_2b_2$ & $a_1b_3$ |
| 8ème temps | $a_4b_2$ & $a_3b_3$ | $a_4b_1$ & $a_3b_2$ & $a_2b_3$ & $\bar{a}_1b_4$ |
| 9ème temps | $a_4b_3$ | $a_4b_2$ & $a_3b_3$ & $\bar{a}_2b_4$ |
| 10ème temps | 0 | $a_4b_3$ & $\bar{a}_3b_4$ |
| 11ème temps | 0 | $\bar{a}_4b_4$ |

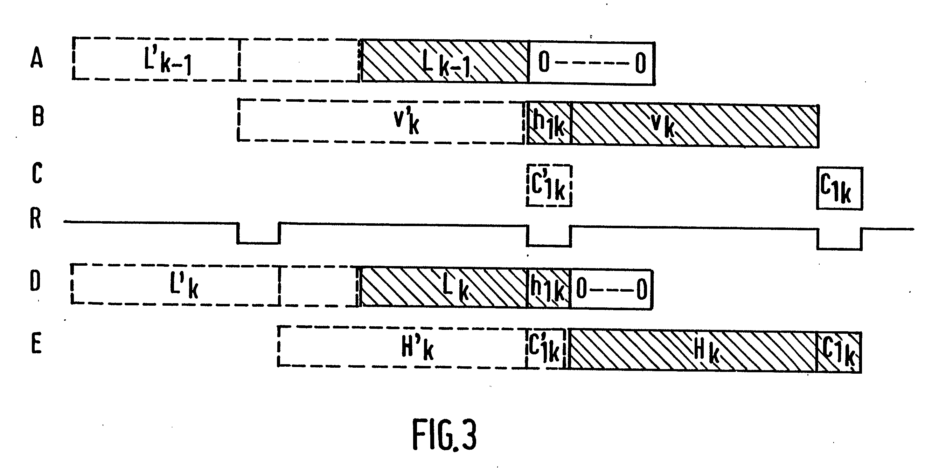

A partir de ces opérations élémentaires effectuées dans chaque cellule du multiplieur, la construction des signaux $L_k$ et $H_k$ va se faire dans chaque cellule de la manière suivante. La situation est représentée sur la figure 3.

En A sont représentées les données sur la connexion $73_k$,

en B sont représentées les données sur la connexion $72_k$,

en C sont représentées les données sur la connexion $71_k$,

c'est-à-dire avant les sélecteurs $34_k$ et $33_k$. Ceux-ci vont être actionnés par le signal $R_{k-1}$(d) de la connexion $76_k$, la position représentée sur la figure 2 étant celle correspondant à $R_{k-1} = 1$. A la fin d'un cycle de calcul $R_{k-1}$ passe à zéro pendant une durée d'horloge. Ceci permet d'insérer certains bits et d'obtenir les configurations représentées en D et E.

Pour une cellule d'ordre k seuls les k premiers bits de $L_k$ ont été déterminés, le reste des k-p (ou k-n) bits sont des zéros. Selon l'invention le bit de poids le plus faible $h_{1k}$ du terme $v_k$ calculé est inséré dans la donnée $L_{k-1}$ pour former $L_k$. Cette insertion contrôlée par le signal R se fait de sorte que le bit $h_{1k}$ devienne le bit le plus significatif de la tranche $L_k$.

Sur le même principe la donnée $c_{1k}$ qui a été calculée par la cellule k est tout d'abord retardée par la cellule $30_k$ et insérée dans la donnée $v_k$ pour former $H_k$. La donnée $c_{1k}$ devient le bit le plus significatif de $H_k$. Cette situation est représentée en E sur la figure 3.

Ces opérations se renouvellent dans chaque cellule et on obtient en sortie du multiplieur la tranche $L_p$ suivie de la tranche $H_p$ constituant le résultat exact de la multiplication de A (n bits) par B (p bits). L'opération ne nécessite que p durées d'horloge pour délivrer $L_p$ et n durées d'horloges pour délivrer $H_p$ pour un résultat exact sur n + p bits. Avec n > p on peut initialiser une nouvelle opération tous les n cycles. Le débit est donc F/n où F est la fréquence d'horloge. Le temps de latence qui est la durée entre l'introduction du premier bit d'une donnée et la sortie du premier bit du résultat, est de p cycles si p est le nombre de cellules.

Les données A et B peuvent être deux entiers. Il est également possible que B par exemple soit un coefficient inférieur à l'unité. Dans ce cas la tranche $H_p$ contient la partie entière du résultat et $L_p$ contient la partie fractionnaire.

Il est possible de mettre en série deux multiplieurs tels que ceux décrits par exemple pour effectuer une extension de la donnée B de p à 2p bits.

Selon le schéma de la figure 5 il est possible de faire opérer les 2 multiplieurs 41, 42 en parallèle pour opérer une première multiplication AxB et une seconde CxD afin d'obtenir le résultat (AxB) & (CxD).

6

Les tranches L des bits les moins significatifs étant délivrées en premier, elles sont additionnées dans l'additionneur 43. De même les tranches H des bits les plus significatifs sont additionnées dans l'additionneur 44 avec la retenue issue de l'additionneur 43.

Le résultat final est de la même façon délivré sur deux tranches de bits.

Le schéma de la dernière cellule représenté sur la figure 2 concerne un multiplieur qui ne peut être cascadé avec l'entrée d'un multiplieur identique. Pour obtenir cette possibilité il est nécessaire de modifier la dernière cellule selon le schéma de la figure 4.

Les bascules $27_p$ et $28_p$ retardent les données $A_p$ et $R_p$ de la même façon que sur les cellules précédentes et les transmettent vers l'extérieur. Un signal F contrôle de l'extérieur le mode de fonctionnement afin de permettre que dans une chaîne de plusieurs multiplieurs seule la dernière cellule du dernier multiplieur ait un mode de fonctionnement particulier. Les autres dernières cellules des multiplieurs précédents sont alors contrôlées par F pour opérer comme toutes les autres cellules. Pour cela une porte ET 51 reçoit F et le bit $b_p$, et une porte OU-exclusif 52 reçoit F et la sortie de la bascule $21_p$. Lorsque le signal F est à l'état logique zéro la dernière cellule a un mode de fonctionnement particulier. Lorsque le signal F est à l'état logique 1 la cellule a le même comportement que toutes les autres cellules.

Ceci permet de cascader plusieurs multiplieurs pour étendre le nombre de bits de l'une au moins des données A ou B.

Ainsi la $p^{ième}$ cellule comprend des moyens pour déterminer la retenue $c_p$, qui entre dans le dernier additionneur, selon :

$$c_p = F.b_p. \bar{R}_{p-1}(d) + R_{p-1}(d).c_{op}(d)$$

et pour effectuer l'opération du type : $(A * F).b_p$, avec (*) représentant la fonction OU-exclusif, et où F est un signal qui permet de contrôler la $p^{ième}$ cellule afin d'obtenir un multiplieur cascadable.

## Revendications

1. Multiplieur pipeline série à structure cellulaire destiné à multiplier deux flux de données numériques synchrones A de n bits $[a_n ... a_k ... a_1]$ et B de p bits $[b_p ...b_k ... b_1]$, n, k et p étant des entiers, en opérant dans chaque cellule de la structure, en mode pipeline, la formation des produits partiels du multiplicande A par chaque bit du multiplicateur B puis leurs additions successives à une fréquence F d'horloge, chaque cellule d'ordre k comprenant :
- un additionneur élémentaire à un bit qui reçoit respectivement des données $x_k$, $y_k$ et des retenues $c_k$, et qui délivre à un instant donné un résultat $v_k$ et une retenue $c_{ok}$,

tel que $v_k = (x_k \& y_k \& c_k)$ modulo 2

$c_{ok} = (x_k \& y_k \& c_k)$ div 2

où $c_k$ à un instant donné est égal à la donnée $c_{ok}$ déterminée dans la même cellule au temps d'horloge précédent puis retardée soit $c_k = c_{ok}(d)$,
- des moyens de retard ($21_k$, $22_k$, $24_k$, $25_k$, $26_k$, $27_k$, $28_k$, $30_k$) pour synchroniser les données issues de deux cellules successives,
- et des moyens de stockage temporaire ($23_k$, $29_k$) d'un bit de donnée et de la retenue $c_{ok}$,

caractérisé en ce que le multiplieur comprend des moyens pour délivrer le résultat exact de l'opération en deux tranches consécutives de bits, avec n ou p cellules, sous le contrôle d'un signal R, A et B étant introduits avec le bit de poids le plus faible en tête, tout d'abord, avec p cellules (respectivement n cellules), une tranche L formée des p bits (respectivement n bits) de poids binaires les plus faibles puis une tranche H formée des n bits (respectivement p bits) de poids binaires les plus élevés, le multiplieur ayant un débit F/n (respectivement F/p), ces moyens comprenant :
- des moyens de génération ($37_k$), puis de stockage temporaire ($30_k$), d'une donnée $c_{1k}$ tel que :

$c_{1k} = (x_k \& y_k \& c_{ok})$ modulo 2

la donnée $c_{1k}$ étant délivrée au cours du même temps d'horloge que la donnée $c_{ok}$,
- et des moyens pour déterminer les tranches partielles $L_k$ et $H_k$ délivrées par chaque cellule d'ordre k tel que :

$L_k = L_{k-1}(d).R_{k-1}(d) + v_k. \bar{R}_{k-1}(d)$

et $H_k = v_k.R_{k-1}(d) + c_{1k}(d). \bar{R}_{k-1}(d)$

où $R_{k-1}(d)$ est le signal $R_{k-1}$ retardé d'un temps d'horloge dans la cellule k, $R_{k-1}$ étant issu du signal R transmis à la cellule k à travers les cellules précédentes, la réintroduction de la retenue $c_k$ dans l'additionneur d'ordre k étant contrôlée par le signal $R_{k-1}(d)$ selon $c_k = c_{ok}(d).R_{k-1}(d)$ pour les $p-1^{ième}$ premières cellules (respectivement les $n-1^{ième}$ premières cellules) et $c_p = b_p. \bar{R}_{p-1}(d) + R_{p-1}(d).c_{op}(d)$ pour la $p^{ième}$ cellule (respectivement $c_n = b_n. \bar{R}_{n-1}(d) + R_{n-1}(d).c_{on}(d)$ pour la $n^{ième}$ cellule), $c_{1k}(d)$ étant la donnée $c_{1k}$

7

retardée d'un temps d'horloge dans la $k^{ième}$ cellule, les p-1$^{ième}$ premières cellules (respectivement les n-1$^{ième}$ premières cellules) effectuant sur les données A et B des opérations de type $A.b_k$ et la $p^{ième}$ cellule (respectivement $n^{ième}$ cellule) effectuant une opération de type $\overline{A}.b_p$ (respectivement $\overline{A}.b_n$), les moyens de retard ($27_k$) retardant dans chaque cellule d'un cycle d'horloge les bits du multiplicateur B (respectivement le multiplicande A) par rapport aux bits du multiplicande A (respectivement le multiplicateur B), les symboles utilisés étant :

(.): ET logique; ( + ): OU logique; (&): addition.

2. Multiplieur pipeline série selon la revendication 1 modifiée en ce que la dernière cellule comprend des moyens pour déterminer la retenue $c_p$ (respectivement $c_n$) selon :

$c_p = F.b_p. \overline{R}_{p-1}(d) + R_{p-1}(d).c_{op}(d)$

(respectivement $c_n = \overline{F}.b_n.R_{n-1}(d) + R_{n-1}(d).c_{on}(d)$)

et pour effectuer l'opération du type : $(A * F).b_p$ (res pectivement $(A * F).b_n$), avec (*) représentant la fonction OU-exclusif, et où F est un signal qui permet de contrôler la dernière cellule afin d'obtenir un multiplieur cascadable.

3. Structure multiplicatrice caractérisée en ce qu'elle comprend une chaîne de plusieurs multiplieurs selon la revendication 2, qui sont cascadés pour étendre le nombre de bits de l'une au moins des données A ou B.

4. Structure multiplicatrice caractérisée en ce qu'elle comprend en parallèle deux multiplieurs ou deux chaînes de multiplieurs selon l'une des revendications 1 à 3, les deux multiplieurs ou les deux chaînes de multiplieurs délivrant simultanément leurs deux tranches $L_1$ et $L_2$ ainsi que leurs deux tranches $H_1$ et $H_2$, les tranches $L_1$ et $L_2$ étant additionnées dans un premier additionneur, et les tranches $H_1$ et $H_2$ et la retenue du premier additionneur étant additionnées dans un second additionneur, chaque additionneur délivrant l'un la partie correspondant aux bits de poids binaires les plus faibles et l'autre la partie correspondant aux bits de poids binaires les plus forts du résultat global.

FIG.1A

FIG.1B

FIG.1C

FIG.2

EP 0 309 037 A1

FIG.3

3-IV-PHF 87-572

FIG.4

FIG.5

Office européen
des brevets

RAPPORT DE RECHERCHE EUROPEENNE

Numero de la demande

EP 88 20 2003

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 8, no. 51 (P-259)[1488], 8 mars 1984, page 100; & JP-A-58 201 141 (MATSUSHITA DENKI SANGYO K.K.) 22-11-1983 * Résumé; figure * | 1-3 | G 06 F 7/52 |
| D,A | GB-A-2 166 272 (STC) * Page 5, lignes 4-31; figures 1-3 * | 1-5 | |
| A | PATENT ABSTRACTS OF JAPAN, vol. 10, no. 389 (P-531)[2446], 26 décembre 1986, page 78; & JP-A-61 177 544 (NIPPON TELEGR. & TELEPH. CORP. (NTT)) 09-08-1986 * Résumé; figure * | 1-5 | |
| A | US-A-3 956 622 (BELL) * Colonne 4, ligne 5 - colonne 6, ligne 6; figures 3-4 * | 1-3 | |

DOMAINES TECHNIQUES RECHERCHES (Int. Cl.4)

G 06 F 7/00

Le présent rapport a été établi pour toutes les revendications

| Lieu de la recherche | Date d'achèvement de la recherche | Examinateur |
|---|---|---|
| LA HAYE | 17-11-1988 | NUSSBAUMER C.P. |